Europäisches Patentamt

(19) European Patent Office

Office européen des brevets

(11) Numéro de publication: **0 218 494**
**B1**

(12) **FASCICULE DE BREVET EUROPEEN**

(45) Date de publication du fascicule du brevet: **19.09.90**

(21) Numéro de dépôt: **86401899.9**

(22) Date de dépôt: **29.08.86**

(51) Int. Cl.⁵: **G 21 C 19/32**

(54) **Procédé et dispositif de compactage d'un faisceau de crayons de combustibles.**

(30) Priorité: **29.08.85 FR 8512898**

(43) Date de publication de la demande:
**15.04.87 Bulletin 87/16**

(45) Mention de la délivrance du brevet:
**19.09.90 Bulletin 90/38**

(84) Etats contractants désignés:
**BE CH DE FR LI SE**

(56) Documents cités:
**EP-A-0 066 695**
**EP-A-0 128 236**
**FR-A-2 528 218**
**FR-A-2 556 489**

(73) Titulaire: **FRAMATOME**
**Tour Fiat 1, Place de la Coupole**
**F-92400 Courbevoie (FR)**

(72) Inventeur: **Beneck, Jean**
**5, rue des Côteaux**
**F-94490 Ormesson (FR)**
Inventeur: **Louvat, Jean-Pierre**
**1, rue des Mortes-Bouteilles**
**F-78140 Velizy Villacoublay (FR)**
Inventeur: **Quayre, Claude**
**50, Avenue Aristide Briand**
**F-93360 Neuilly Plaisance (FR)**

(74) Mandataire: **Fort, Jacques et al**
**CABINET PLASSERAUD 84, rue d'Amsterdam**
**F-75009 Paris (FR)**

Courier Press, Leamington Spa, England.

# Description

L'invention concerne le compactage d'un faisceau de crayons de combustibles nucléaires afin de réduire l'encombrement transversal de ce faisceau en vue de son stockage.

On sait que les assemblages combustibles extraits d'un réacteur après irradiation doivent être stockés en piscine jusqu'à désactivation suffisante Pour permettre le retraitement des crayons. Il est souhaitable de réduire le plus possible le volume occupé par le faisceau de crayons d'un assemblage, pour augmenter la capacité de stockage de la piscine. On a déjà proposé de séparer le squelette de l'assemblage et les crayons de combustibles, qui constituent les éléments les plus actifs, et de grouper ces derniers sous forme d'une botte où les crayons sont serrés les uns contre les autres et répartis suivant un réseau triangulaire.

Dans les assemblages les plus fréquemment utilisés, notamment dans les réacteurs à eau légère, les crayons sont répartis dans un assemblage suivant un réseau à maille carrée dont certains noeuds sont occupés par des éléments de nature différente, tels que des tubes-guides appartenant au squelette de l'assemblage. Il faut, à distance et sous eau du fait de l'activité résiduelle et du dégagement de chaleur des crayons, extraire ces derniers de l'assemblage et les regrouper en une botte à pas triangulaire serré, puis introduire cette botte dans un étui de stockage.

On a déjà proposé de nombreux dispositifs pour arriver à ce résultat et on en a réalisé quelques uns. La plupart des dispositifs utilisent le fait que, de par leur grande longueur et leur faible diamètre, les crayons présentent une flexibilité permettant de les courber lors du passage d'une maille à l'autre. Le document FR-A-2 528 218 décrit par exemple un procédé consistant à faire glisser les crayons dans un dispositif de compactage formé de tubes de guidage réalisant une transformation de pas et prolongés par des passages délimités par des tiges longitudinales. On peut mettre en doute la fiabilité d'un tel système. Au surplus, l'absence de crayon à certains noeuds du réseau d'origine, où ils sont remplacés par des tubes appartenant au squelette, se traduit par des vides dans la botte et par des discontinuités d'appui pouvant conduire à des chevauchements entre crayons.

Le document FR-A-2 506 993 décrit une installation effectivement réalisable, comportant plusieurs appareils mis en oeuvre successivement et notamment un dispositif de compactage. Ce dernier comprend un carquois vertical dans lequel les crayons d'un faisceau sont insérés tous à la fois par le haut, dans des cadres successifs qui les obligent à se placer d'abord suivant un réseau à maille rectangulaire, puis suivant un réseau carré à pas serré, enfin suivant un pas triangulaire. Le dispositif est en trois tronçons de forme approximativement pyramidale. Il a l'inconvénient d'être complexe et d'exiger l'insertion à force des crayons par des trains de rouleaux, pour vaincre la résistance élastique opposée par les crayons à leur flexion.

L'invention vise à fournir un procédé et un dispositif de compactage répondant mieux que ceux antérieurement connus aux exigences de la pratique, notamment en ce qu'on n'impose pas aux crayons des flexions élastiques exigeant la mise en oeuvre de forces d'insertion élevée; elle vise également à former une botte dans laquelle les crayons sont répartis sans laisser de vide aux noeuds d'un réseau triangulaire.

Dans ce but l'invention propose notamment un procédé pour mettre un faisceau de crayons de combustible disposés suivant une maille carrée, extrait d'un assemblage de combustible, sous forme d'une botte de crayons jointifs à maille triangulaire, suivant lequel:

(a) on prélève simultanément dans l'assemblage l'ensemble des crayons, exception faite de crayons qui sont placés dans des lignes adjacentes à celles qui comportent des noeuds inoccupés et qui ne sont pas adjacents à un noeud inoccupé,

(b) on fait descendre les crayons prélevés dans un carquois vertical de forme pyramidale convergeant vers le bas et dont deux faces opposées présentent des saillies de mise en quinconce des crayons,

(c) on écarte les uns des autres de façon symétrique plusieurs groupes de colonnes de crayons pour créer des espaces de réception, à la partie haute du carquois,

(d) on saisit l'ensemble des crayons restants que l'on fait tourner en bloc de 90° et que l'on fait descendre dans les espaces libres de réception entre groupes de colonnes (la tête de prehension ayant au préalable tourné de 90° de façon à saisir les crayons restants),

(e) et on serre les rangées de crayons en relevant le carquois pour constituer une botte compacte à l'aide des pinces pendant la montée du carquois,

L'invention propose également un dispositif de compactage permettant de mettre en oeuvre le procédé ci-dessus défini, comprenant notamment: un carquois de forme pyramidale convergeant vers le bas et de section rectangulaire, deux faces opposées du carquois étant munies de saillies de profondeur croissant vers le bas pour tendre à ordonner les crayons suivant un pas triangulaire; des cloisons perpendiculaires aux faces munies de saillies, destinées à séparer et guider des files de crayons à la partie haute du carquois; et une grille située à la partie haute du carquois, comportant des alvéoles d'introduction des crayons et constituée en plusieurs fractions pouvant être écartées et rapprochées les unes des autres parallèlement à la direction des cloisons;

un fond pouvant prendre une position haute proche du bas du carquois et une position basse éloignée du carquois; et une tête de préhension permettant de prélever plusieurs crayons à la fois et de les introduire le carquois.

L'invention sera mieux comprise à la lecture de la description qui suit d'un mode particulier d'exécution donné à titre d'exemple non limitatif. La description se réfère aux dessins qui l'accompagnent, dans lesquels:

la Figure 1 est une vue schématique en élévation montrant l'ensemble des composants d'un dispositif suivant l'invention;

les Figures 1A à 1G montrent la disposition relative des différents composants du dispositif de la Figure 1 à différentes étapes de mise en oeuvre du procédé.

la Figure 2 est une vue de dessus de la Figure 1, certains éléments n' étant pas représentés;

la Figure 3 est un schéma d'un assemblage combustible représentatif, en vue de dessus, montrant la répartition des crayons et ceux des crayons qui sont enlevés au cours d'un premier transfert;

les Figures 4 et 5 sont des schémas en vue de dessus d'une cellule de regroupement et d'un carquois appartenant au dispositif de la Figure 1;

la Figure 6 est une vue en coupe de la partie basse du carquois;

les Figures 7 et 8 sont des vues en perspective d'un carquois simplifié, les composants étant représentés respectivement dans les positions occupées en vue du premier et du second transferts de crayons;

la Figure 9 est une vue de dessus schématique montrant les crayons déposés dans le carquois de la Figure 5 après le premier transfert;

la Figure 10, similaire à la Figure 3, montre la disposition des crayons pris par la tête de préhension du dispositif après rotation de 90° et, en traits épais, les crayons prélevés dans l'assemblage par la tête de préhension au cours du second transfert:

les Figures 11 et 12, similaires à la Figure 9, montrent le carquois de la Figure 5 avec ses grilles écartées, respectivement après le premier et le second transfert.

la Figure 13, similaire aux Figures 7 et 8, montre l'ensemble des crayons de l'assemblage regroupés;

les Figures 14 et 15 montrent deux dispositions possibles en quinconce des crayons dans le carquois.

la Figure 16 est une vue en élévation et en coupe partielle d'une constitution possible de tête de préhension.

la Figure 17 est une vue de détail à grande échelle montrant une variante de la figure 16, la tête d'extraction étant montrée engagée.

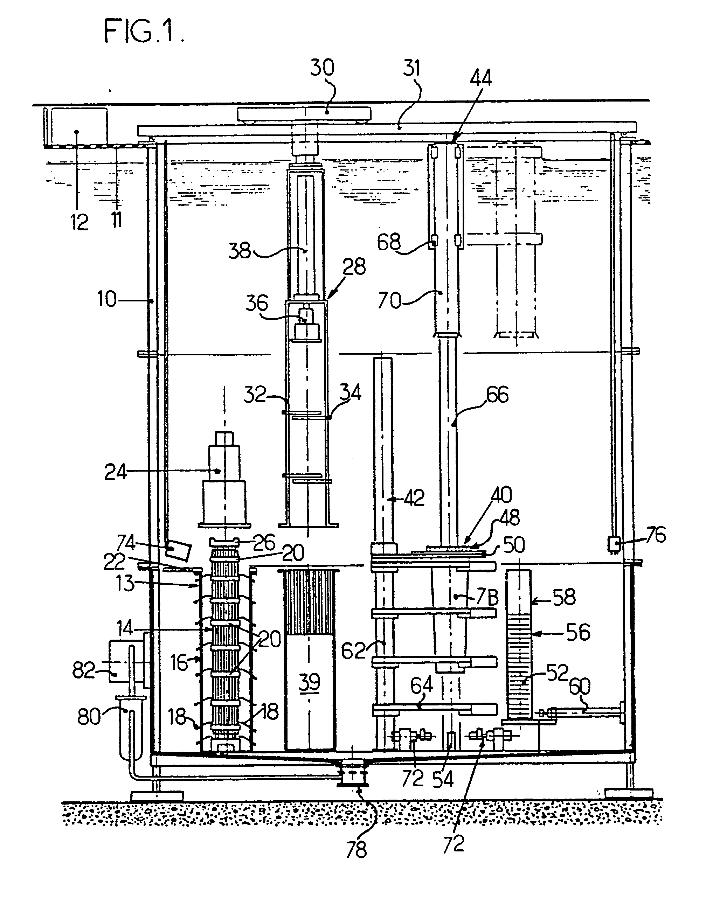

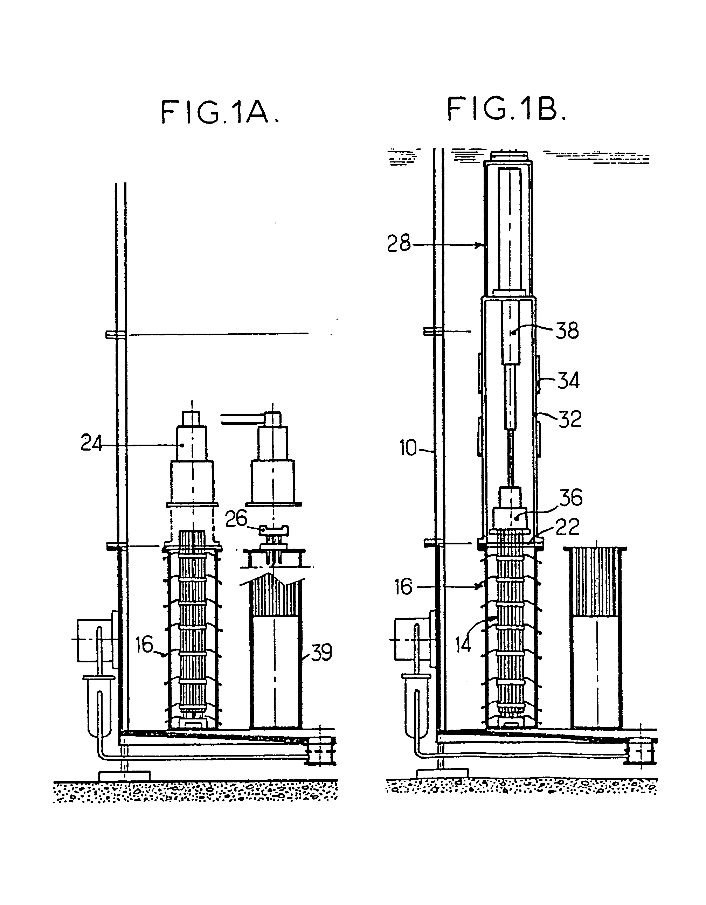

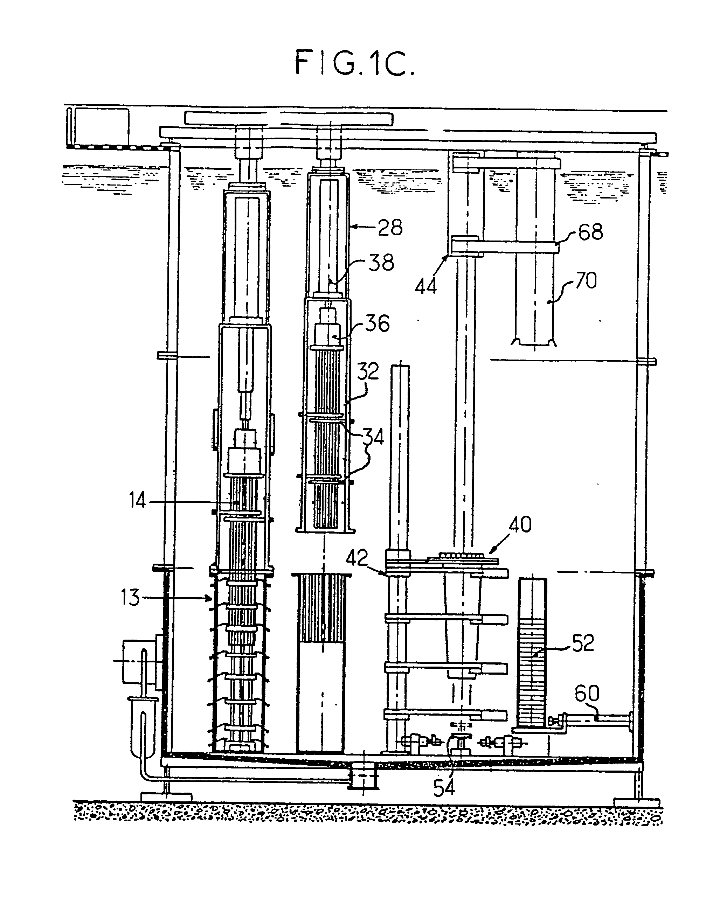

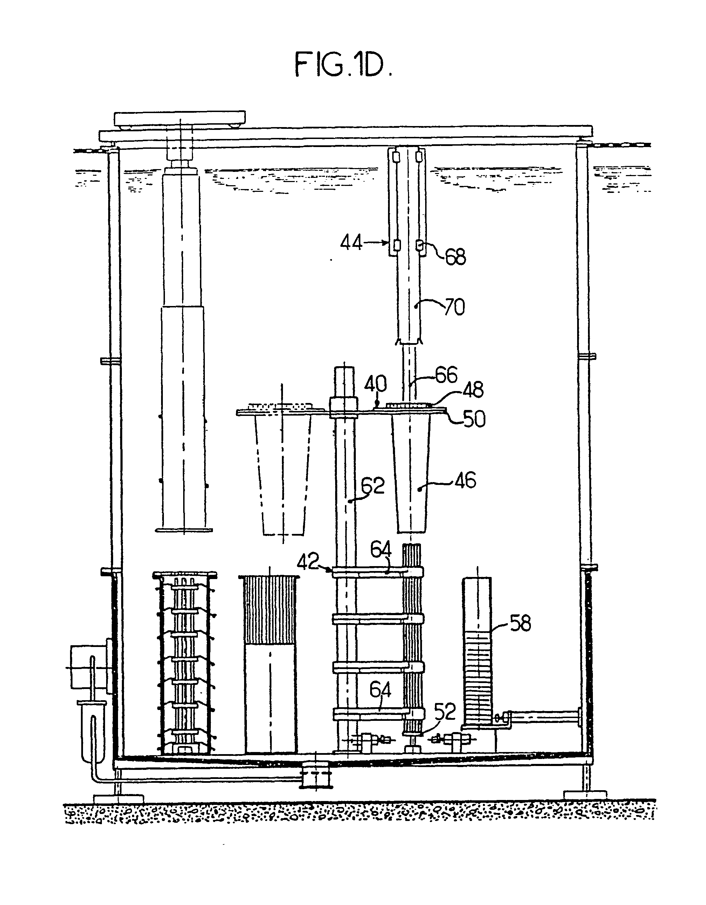

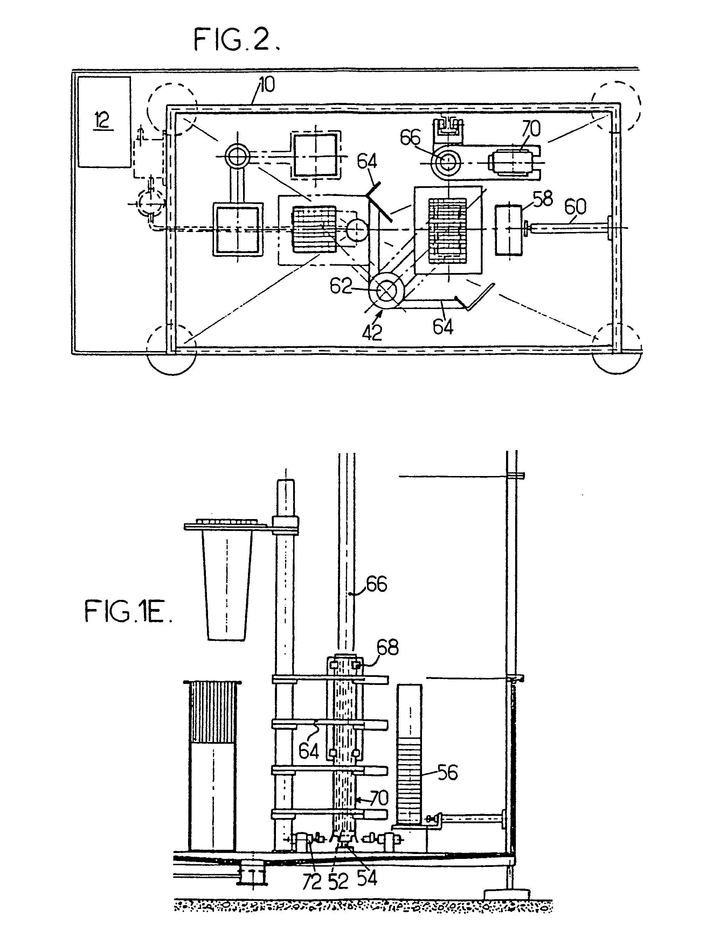

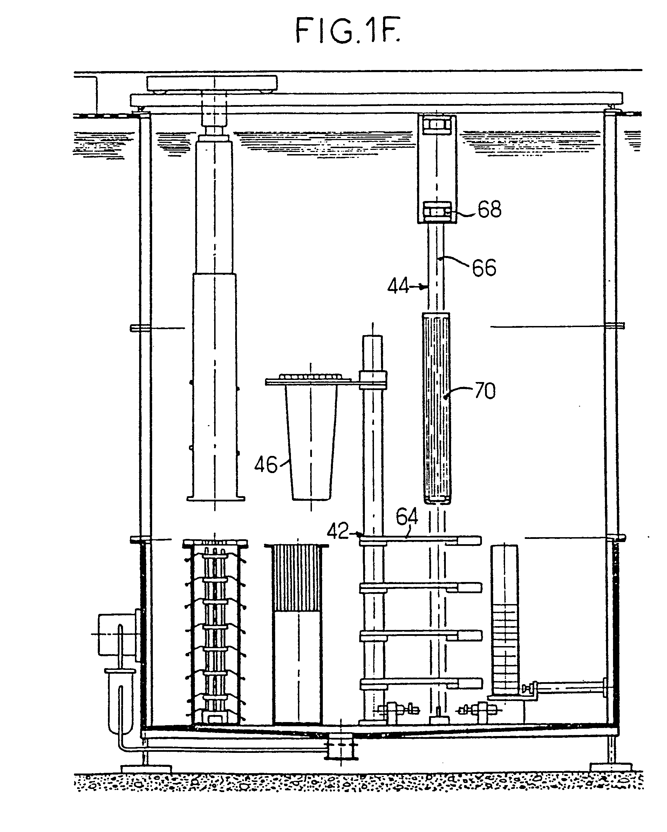

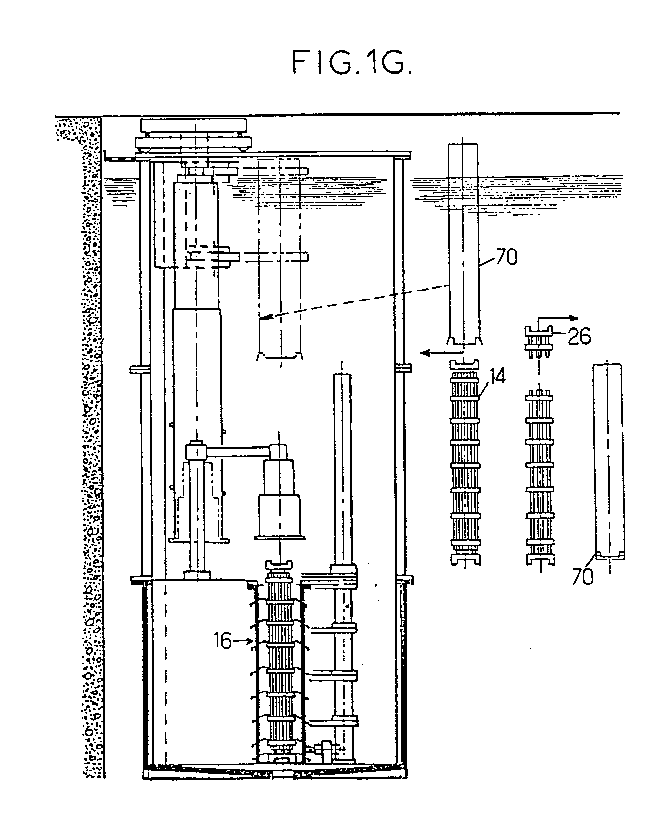

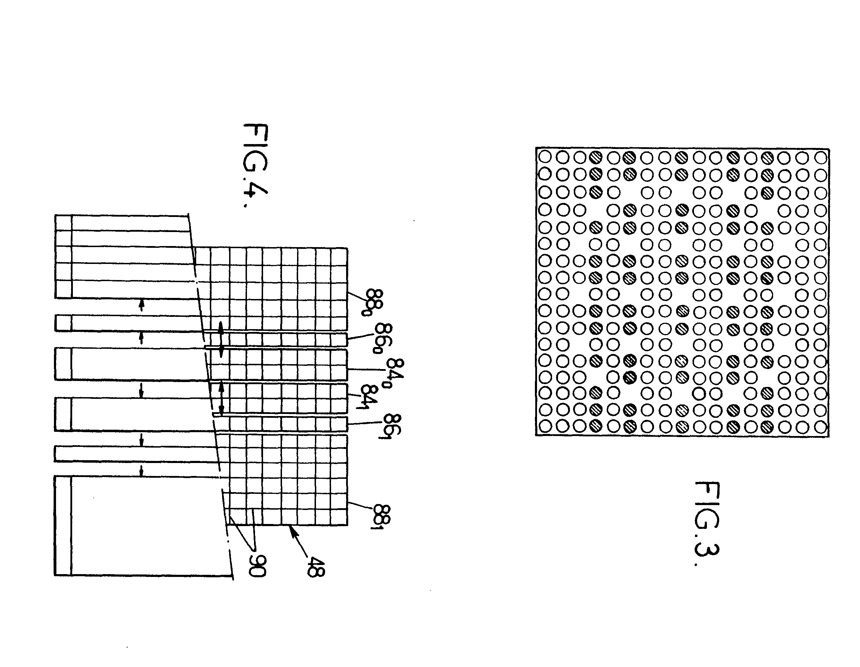

Le dispositif montré en Figures 1 et 2 est incorporé dans une installation qui a une constitution générale similaire à celle de stations de stockage connues et qui permet non seulement d'extraire les crayons d'un assemblage et de les regrouper en bottes, mais aussi d'évacuer les étuis contenant les bottes vers un emplacement de désactivation et de stockage et de réduire le volume du squelette de l'assemblage.

L'installation représentée en figure 1 est placée dans une piscine de réception des assemblages extraits du coeur d'un réacteur. Elle comprend une structure principale 10 rigide, munie d'une passerelle de service 11 placée au-dessus du niveau de l'eau. La passerelle 11 porte une unité de commande 12 prévue pour provoquer le fonctionnement séquentiel des différents composants de l'installation.

Sur le fond de la structure 10 repose une cellule 13 de réception de l'assemblage 14 à démanteler. Cette cellule est constituée d'un étui de dépose 16, de griffes 18 commandées par un mécanisme à embiellage et permettant de retenir les grilles 20 de l'assemblage 14 et de peignes 22 assurant l'écartement des crayons de l'assemblage à un pas nominal. Ces peignes sont avantageusement placés de façon à s'engager sous la première grille 20. Des vérins (non représentés) sont prévus pour commander les griffes et les peignes.

L'installation comprend plusieurs outils déplaçables horizontalement et verticalement pour leur permettre d'intervenir sur l'assemblage 14 placé dans la cellule 13 ou sur les crayons.

Un premier outil 24, qui peut avoir une constitution connue, est prévu pour découper les tirants reliant les embouts de l'assemblage 14, juste au-dessous de l'embout 26 placé en haut, pour séparer cet embout et permettre de saisir les crayons de l'assemblage.

Un outil de préhension 28, suspendu à un chariot 30 qui circule sur des rails 31 portés par la passerelle 11, est prévu pour extraire les crayons et les manutentionner. Il comprend une ossature 32 de guidage vertical des crayons, munie de peignes 34, et une tête de préhension 36, non représentée, qui peut être du type décrit dans le document FR-A-2 460 027. La tête 36 est déplaçable verticalement dans l'ossature 32 par un vérin 38.

Sur le fond de la structure est également prévu un carquois 39 permettant de recevoir les crayons défectueux.

Le dispositif suivant l'invention proprement dit comprend une cellule de regroupement 40, un outil de mise en botte 42 et un ensemble 44 de mise en étui de stockage, qui seront successivement décrits.

La cellule de regroupement 40 comporte un carquois pyramidal 46 muni de grilles mobiles 48, monté sur la Figure 1 porté par un support 50 déplaçable verticalement. Le carquois 46 est à extrémité basse ouverte pour permettre aux crayons qui y sont déposés de le traverser et de venir en appui sur un fond rapporté 52. Un pied levable 54 est prévu pour recevoir ce fond, fourni par un distributeur 56. Le distributeur comporte un boîtier 58 de stockage de fonds empilés et un vérin horizontal 60 permettant d'amener un fond à la fois sur le pied 54. La cellule de regroupement 40 sera décrite en détail plus loin et l'on verra que, de par sa forme et sa conception, elle rassemble les crayons jointifs sous forme d'une botte.

L'outil de mise en botte 42 comporte de son côté un mât vertical fixe 62 sur lequel peuvent tourner des mors de pince 64 (Figures 1 et 2). Ces mors peuvent tourner entre une position ouverte, dans laquelle ils sont montrés en Figure 2, et une position fermée en appui sur les crayons. Les pinces 64 peuvent ainsi achever le groupement en botte des crayons et les maintenir pendant et après le soulèvement du carquois 46.

Enfin, l'ensemble de mise en étui 44 comporte un mât vertical fixe 66 le long duquel peut coulisser et autour duquel peut tourner une pince 68 de maintien d'étuis de stockage de crayons 70, représentée sur la Figure 2 dans la position montrée en traits mixtes sur la Figure 1. L'étui 70 est destiné à maintenir définitivement en botte les crayons combustibles, en vue de leur stockage en piscine, après fermeture à l'aide d'un fond 52.

Cette fermeture est réalisée par un mécanisme 72, comportant quatre vérins qui plient les bords des faces de l'étui de stockage sous le fond pour assurer l'obturation définitive.

Enfin, l'installation est complétée par des éléments annexes qui, dans le cas montré en Figure 1, comprennent des caméras d'observation dont une seule, 74, est représentée, un outil 76 de manutention de squelette et un circuit de récupération de déchets. Ce dernier comporte un regard 78 au fond de la structure 10, relié par une tuyauterie à un filtre 80 et à une pompe de circulation 82. Les tronçons de crayon ou autres objets errants peuvent être récupérés dans le regard 78.

En faisant référence aux Figures 3 et suivantes, on décrira maintenant en détail différents éléments d'un dispositif destiné à traiter des assemblages à pas carré comportant 17 x 17 = 289 noeuds, dont 264 sont occupés par des crayons avec la disposition montrée en Figure 3. Il faut cependant garder en mémoire que l'invention a une portée beaucoup plus générale et qu'elle permet d'éliminer les vides dans la botte de crayons finalement obtenue (ou du moins de les réduire au minimum) et ce sans infliger de déformations aux crayons au cours de leur transfert, pour tout assemblage ayant une symétrie de révolution, généralement d'ordre 4.

Pour cela, il sera toujours prévu un transfert en au moins deux étapes successives, le dépôt des crayons au cours du second transfert s'effectuant après rotation de 90° en bloc par rapport aux crayons déjà en place.

Dans le cas d'un assemblage à 264 crayons, les autres noeuds étant occupés par des tirants appartenant au squelette, la tête de préhension 36 est destinée à saisir les crayons, ayant la disposition des crayons non hachurés sur la Figure 3. La tête proprement dite peut avoir l'une des constitutions déjà connues, par exemple celles montrées dans les document FR-A-2 506 993 et 2 533 065 déjà mentionnés ou celle qui sera décrite plus loin.

Le carquois 46 de la cellule 40 aura alors une grille supérieure 48 du genre montré en Figure 4, en six parties dont certaines mobiles les unes par rapport aux autres de la position resserrée montrée à la partie supérieure de la Figure 4 à la position montrée à la partie inférieure. Si on considère la partie $84_0$ comme fixe, les déplacements seront:

d'un pas p égal à l'écartement entre deux crayons de l'assemblage pour les parties adjacentes $84_1$ et $86_0$,

de deux pas pour les parties $86_1$ et $88_0$, symétriquement par rapport à $84_0$,

de trois pas pour $88_1$.

Chaque grille comporte des croisillons tels que 90, formant des passages emprisonnant chacun un crayon.

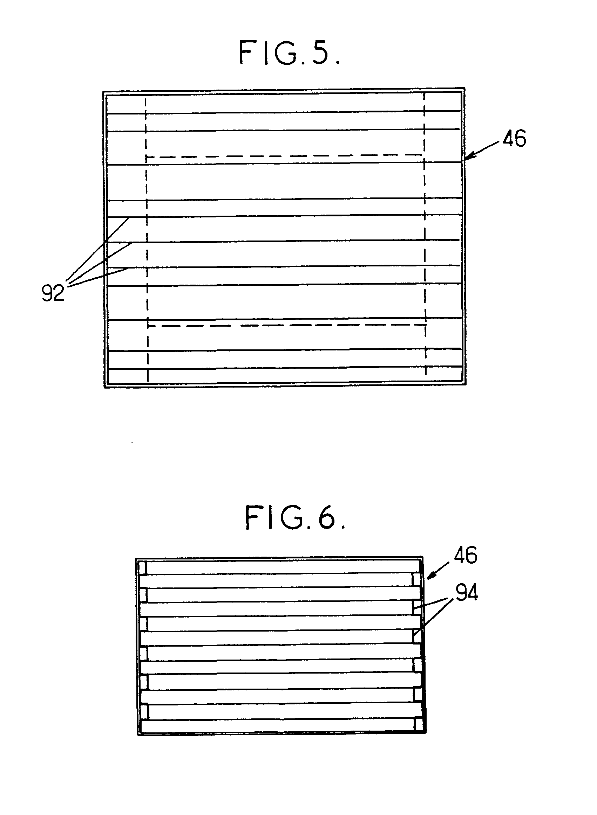

Le carquois 46 comprend de son côté, du moins à sa partie haute, des cloisons séparatrices 92 de guidage des crayons, parallèles à la direction de déplacement des grilles (Figure 5). Il présente une forme générale en tronc de pyramide allant en se rétrécissant vers le bas pour rapprocher les crayons les uns des autres. De plus, pour faire passer les crayons du pas carré qu'ils occupent dans l'assemblage à un pas triangulaire, les deux faces du carquois perpendiculaires aux cloisons 92 présentent, à leur partie basse, des cannelures 94 de profondeur croissante (Figure 6). Ces cannelures, ayant une profondeur maximale correspondant au demi-diamètre des crayons, tendent à placer ces derniers en quinconce au fur et à mesure de leur enfoncement.

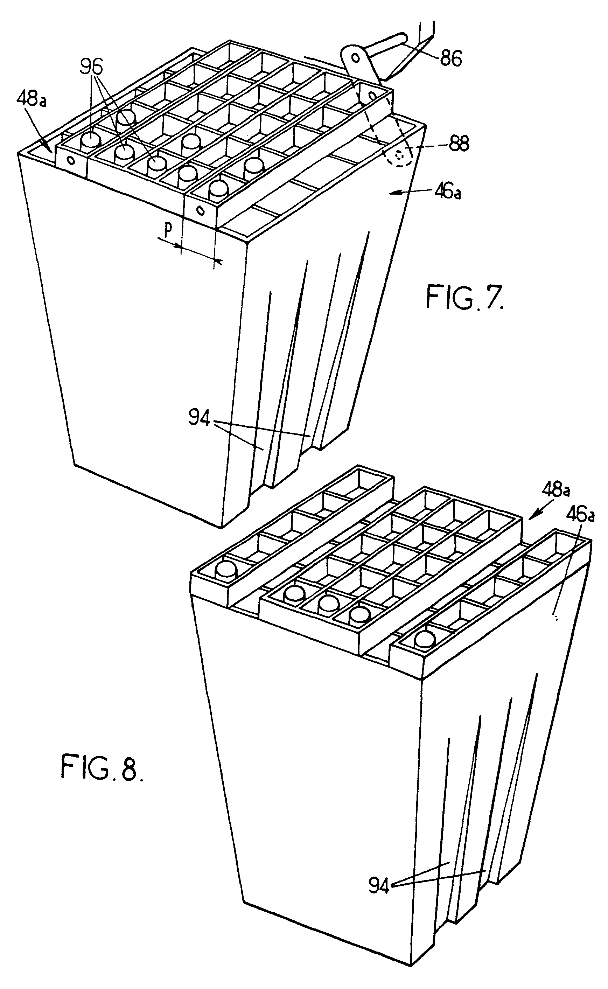

Pour mieux faire apparaître le rôle du carquois et des grilles, on a représenté sur la Figure 7 (où l'échelle n'est pas respectée, le carquois étant en fait beaucoup plus long qu'il n'a été montré) un carquois 46a montrant à titre d'exemple 5 x 5 crayons 96. Sur le carquois apparaissent les cannelures 94, de profondeur croissant vers le bas. Les parties de la grille 48a sont montrées sur la Figure 7 en position rapprochée. Un mécanisme, schématisé sous forme d'une came 86 et de deux leviers 88, permet d'écarter les deux parties extrêmes de la grille 48a chacune d'un pas p, pour les amener dans la position montrée en Figure 8.

On décrira maintenant, en faisant notamment référence aux Figures 1 à 1F, le fonctionnement de l'installation qui vient d'être décrite.

L'assemblage de combustible usé 14 est amené, par des moyens de manutention qui peuvent être classiques, et déposé dans l'étui 16. Il est ensuite immobilisé dans cet étui à l'aide des griffes 18 qui viennent s'appuyer sur les grilles 20. Les peignes 22 sont ensuite actionnés par des vérins et viennent s'engager sous la première grille 20 pour maintenir les crayons aux noeuds d'un réseau régulier.

L'outil 24 de découpage est ensuite amené au-dessus de l'assemblage 14 (Figure 1) puis descendu sur ce dernier. Il comporte des couteaux destinés à cisailler les tirants et un grappin permettant d'enlever ensuite l'embout supérieur, puis de venir le déposer sur la cellule 39 (Figure 1A).

L'outil de préhension 28 porté par le chariot 30 est alors amené au-dessus de l'assemblage 14. Le vérin 38 est actionné pour amener la tête de préhension en prise sur les crayons. Cette tête peut avoir une constitution connue, par exemple du genre décrit dans le brevet US 281 777. Cependant, une autre solution consiste à prévoir une tête comportant trois plaques superposées percées de 264 trous pour assurer la prise par décalage relatif. Dans ce cas, la tête est descendue jusqu'à ce que les plaques s'engagent sur la partie supérieure des crayons de façon à saisir les 204 crayons non hachurés sur la Figure 3.

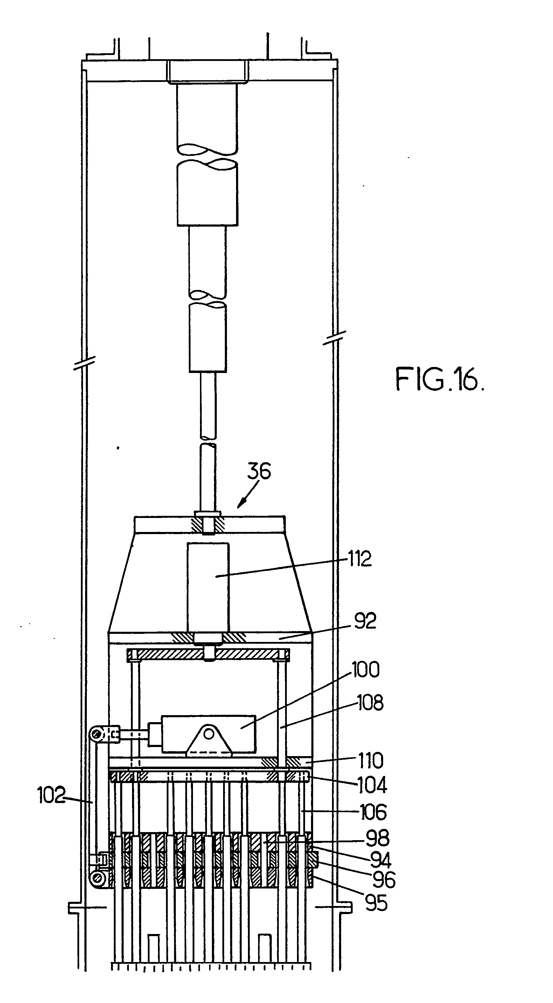

La tête 36 de l'outil de préhension 28 peut avoir la constitution montrée en figure 16. Sur la figure 16, cette tête 36 comprend un corps 92 auquel sont fixées des plaques guides supérieure 94 et inférieure 95. Un coulisseau déplaçable longitudinalement par rapport au corps comprend une plaque intermédiaire 96 mobile transversalement au sens de déplacement du corps. Cette plaque est guidée par des entretoises 98 fixées aux plaques-guides. Ses déplacements sont provoqués par un vérin 100 relié au coulisseau par une bielle 102. Un ensemble éjecteur monté sur le corps de façon à pouvoir coulisser longitudinalement par rapport aux crayons comporte une embase 104 et des poussoirs 106. Cet éjecteur est relié, par des tiges 108 qui traversent une plaque de guidage 110, au piston d'un vérin de commande 112.

Le fonctionnement de la tête apparaît immédiatement. Le déplacement de la plaque intermédiaire mobile 96 sous l'action du vérin 100 coince les crayons combustibles préalablement introduits dans les plaques-guides par descente de la tête. Des détecteurs peuvent être prévus dans ces plaques pour vérifier que chaque crayon est bien introduit. Une fois les crayons coincés, la tête peut être déplacée pour amener les crayons au-dessus du carquois 46. Ils sont ensuite relâchés par manoeuvre du vérin 100. En mettant en action le vérin 112, les poussoirs 106 pénètrent dans les trous des plaques et chassent simultanément les crayons.

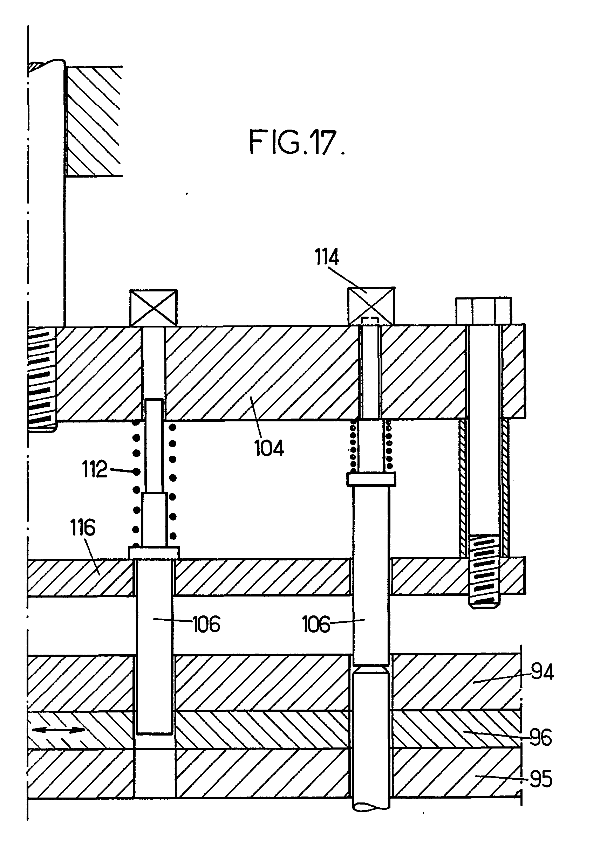

Dans la variante de réalisation montrée en figure 17, où les organes correspondant à ceux déjà décrits sont désignés par le même numéro de référence, les poussoirs d'éjection 106 ne sont pas fixés de façon rigide à la plaque 104, mais peuvent coulisser par rapport à cette plaque entre une position de repos vers laquelle ils sont sollicités par des ressorts 112 et une position comprimée, dans laquelle ils excitent un détecteur 114. La position de repos des poussoirs 106 est fixée par une plaque de butée 116 fixée de façon rigide à la plaque 104 et percée de trous de passage des poussoirs 106. On voit que, lors de la descente de la tête de préhension sur un assemblage, les crayons présents dans l'assemblage repoussent les poussoirs correspondants contre les contacteurs 114 (à droite sur la figure 17). On obtient ainsi un signal par crayon présent.

Après saisie des crayons, le vérin télescopique 38 est de nouveau actionné pour relever la tête et extraire les 204 crayons de leur assemblage (Figure 1C). Au cours de l'extraction, les peignes 34 maintiennent les crayons au pas convenable. Au cours de la remontée, les crayons peuvent être inspectés, par exemple à l'aide de la caméra 72. Si une détection visuelle montre que certains crayons sont défectueux, il est possible de déposer temporairement le faisceau dans la cellule 39 et d'y laisser les crayons défectueux. A l'issue de l'opération d'enlèvement des crayons, le squelette de l'assemblage et les 60 crayons indiqués en hachures sur la Figure 3 restent en place dans l'étui de dépose 16.

Les 204 crayons extraits, maintenus dans l'ossature de guidage 32 par le vérin 38, sont alors amenés au-dessus de la cellule de regroupement 40.

Parallèlement à ce mouvement, un fond 52 destiné à l'obturation inférieure d'un étui de stockage est amené sur le pied 54. Pour cela, ce dernier est relevé (position indiquée en tirets sur la Figure 1C) et le vérin 60 pousse un fond 52 sur le pied qui est ensuite redescendu.

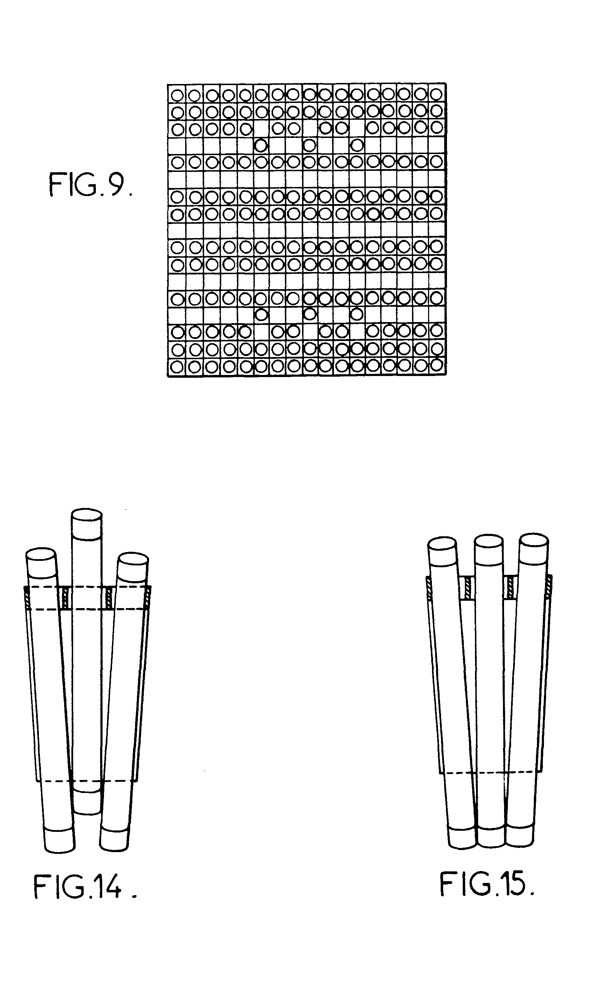

Les 204 crayons combustibles extraits de leur assemblage et amenés au-dessus de la cellule de regroupement 40 sont ensuite descendus dans le carquois 46. Ils s'engagement dans le carquois avec la disposition montrée schématiquement en Figure 9. Au fur et à mesure de leur descente, ces crayons se resserrent en restant guidés par les cloisons séparatrices 92 (Figure 5) et tendent également à prendre la disposition en quinconce imposée par les cannelures 94 (Figure 6). Au cours de cette descente, les crayons appartenant à des rangées complètes prennent, à leur partie basse qui s'appuie sur le fond 52 en place, la disposition qu'ils conserveront dans la botte définitive.

Les peignes 34 sont ramenés à leur position escamotée. Puis les 204 crayons sont libérés. Le vérin 38 remonte la tête de préhension 36. Le premier transfert de crayons est alors achevé.

En vue du second transfert de crayons, le chariot 30 amène l'outil de préhension 28 au-dessus de la cellule de dépose 13. puis des moyens, non représentés, imposent à la tête de préhension une rotation de 90° dans le plan horizontal. La tête est de nouveau descendue par le vérin 38 de façon que les plaques percées de 264 trous s'engagent sur la partie supérieure des crayons restants par un mouvement de haut en bas. Les dispositifs de la tête de préhension 36 sont alors actionnés et saisissent les 60 crayons restants (hachurés sur la Figure 3).

Le vérin 38 est de nouveau actionné pour relever la tête 36 afin d'extraire les 60 crayons de l'assemblage, le pas étant encore maintenu par les peignes 34. L'outil 28 est de nouveau amené au-dessus de la cellule de regroupement 40.

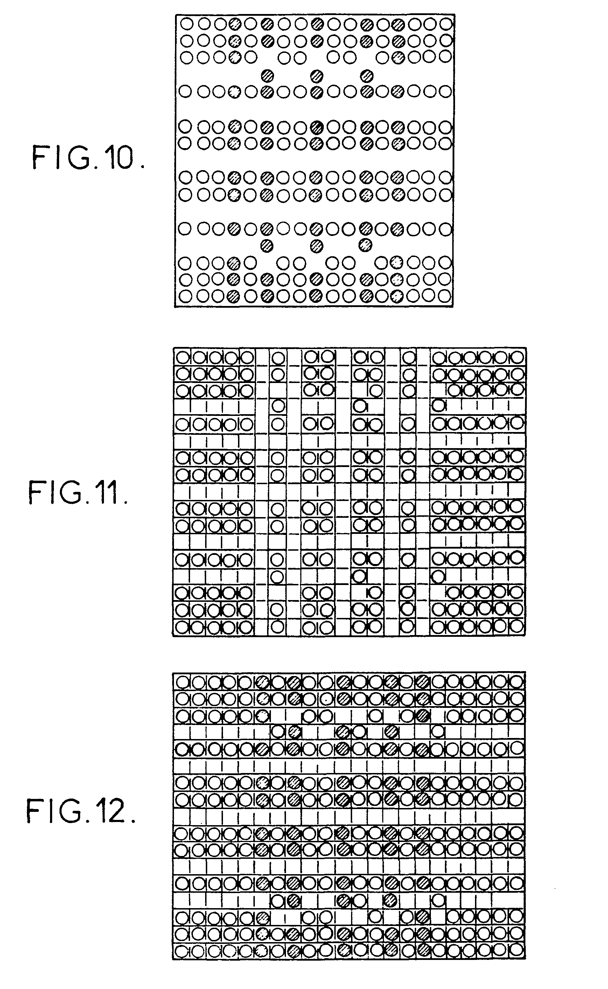

Parallèlement, les grilles 48 du carquois ont été actionnées de façon que leur partie 84-88 passe dans la position indiquée à la partie inférieure de la Figure 4. La disposition de la partie supérieure des crayons déjà déposés dans le carquois devient alors celle montrée en Figure 11. La tête de préhension 36 tourne de 90° et est descendue de nouveau et les 60 crayons qu'elle porte viennent s'insérer entre les crayons déjà en place, pour arriver à la disposition montrée en Figure 12 (où les 60 crayons supplémentaires sont indiqués par des hachures). Du fait de sa forme pyramidale et de sa géométrie, le carquois rassemble tous les crayons en position jointive à la partie inférieure du carquois. On constate en effet que le regroupement va conduire à combler les brèches des rangées presque complètes par les quelques crayons qui occupent les rangées intermédiaires.

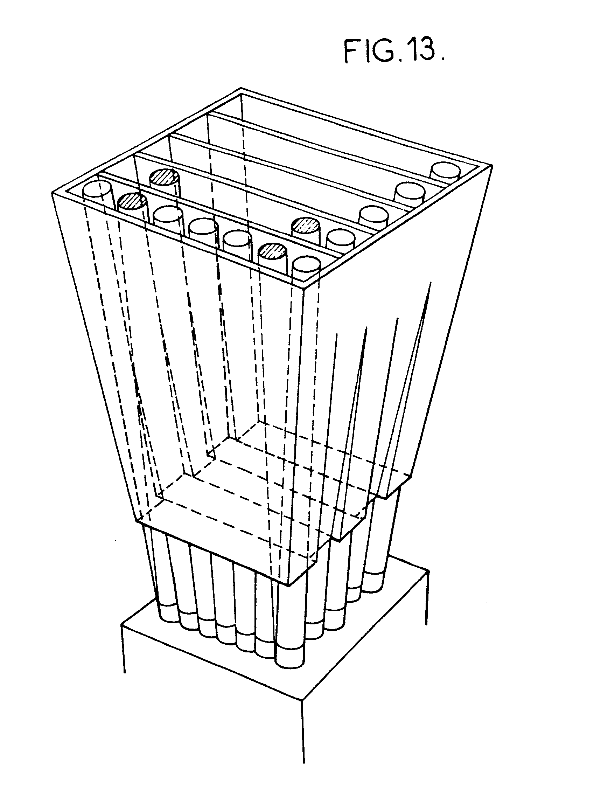

Le résultat obtenu apparaît mieux dans le cas simplifié illustré en Figures 7, 8 et 13. La Figure 7 montre une rangée complète de crayons. La Figure 8 montre les grilles écartées, faisant apparaître des brèches. La Figure 13 montre l'insertion de crayons qui, après regroupement, vont combler les brèches existantes.

L'outil de mise en botte 42 intervient alors, après relèvement de la tête de l'outil de préhension 28. Le jeu de pinces 64 placé le plus bas intervient le premier pour saisir l'ensemble de 264 crayons. Le carquois 46 est relevé progressivement, par exemple à l'aide d'un système à câble. Au cours de ce mouvement de remontée, le carquois 46 est guidé par le mât 62. Cette remontée se fait à vitesse lente, de l'ordre de 0,1 m/s. La botte de crayons, posée sur le fond 52, reste pendant ce temps maintenue par le jeu de pinces 64 placé le plus bas. Au fur et à mesure de la montée du carquois 46, le jeu de pinces intermédiaire, puis le jeu de pinces supérieur, se ferment pour saisir la botte de crayons afin de conserver la géométrie de cette dernière et de resserrer progressivement les crayons les uns contre les autres.

A l'issue de cette opération, la disposition est celle montrée en Figure 1D. Le carquois est alors déplacé horizontalement pour laisser libre l'accès à l'étui de stockage définitif 70. Le dégagement du carquois se fait par exemple par rotation de 180° de son support 50 pour l'amener dans la position montrée en traits mixtes sur la Figure 1D.

L'ensemble 44 de mise en étui intervient alors. L'étui de stockage 70, jusque là maintenu verticalement en position haute par le mât 66 et la pince de maintien 68 (Figure 1C), est amené au-dessus de la botte de crayons par rotation de la pince 68 autour du mât. Puis l'étui, ouvert et évasé à sa partie inférieure, est descendu le long du mât sous l'action d'un moteur non représenté et vient coiffer la partie supérieure de la botte de crayons. Au fur et à mesure de la pénétration de l'étui 70 sur la botte, les pinces supérieures, intermédiaires et inférieures 64 se dégagent pour libérer la botte. L'étui de stockage 70 entoure finalement la botte complètement et déborde autour du fond 52 (Figure 1E). Les vérins 72 interviennent alors pour replier les parties terminales des parois de l'étui 70 et obturer cet étui qui peut être ensuite extrait (Figure 1F).

L'étui de stockage peut ensuite être extrait de la structure principale 10 par un appareil de manutention classique.

Enfin, l'étui plein 70 étant éloigné, l'embout supérieur de l'assemblage combustible découpé 26 et le squelette résiduel étant évacué vers un emplacement de stockage, un assemblage neuf est placé dans l'étui de dépose 16 et un étui de stockage 70 neuf est ramené. L'opération peut alors reprendre sur un autre assemblage.

L'invention est évidemment susceptible de nombreuses variantes de réalisation. En particulier, au lieu d'utiliser un carquois qui ramène tous les crayons au même niveau, comme indiqué schématiquement en Figure 15, il est possible de prévoir un léger décalage vertical, comme montré en Figure 14, qui est légèrement plus favorable.

Dans une autre variante de réalisation, deux carquois accotés et solidaires sont utiisés pour stocker les éléments de deux assemblages; l'ensemble des deux carquois peut alors avoir la dimension de l'assemblage initial et peut être placé en piscine dans les casiers de stockage prévus pour des assemblages.

**Revendications**

1. Procédé pour mettre un faisceau de crayons de combustible disposés suivant une maille carrée extrait d'un assemblage de combustible, sous forme d'une botte de crayons jointifs à maille triangulaire, caractérisé en ce que:

(a) on prélève simultanément dans l'assemblage (14) l'ensemble des crayons, exception faite de crayons qui sont placés dans des lignes adjacentes à celles qui comportent des noeuds inoccupés et qui ne sont pas adjacents à un noeud inoccupé,

(b) on fait descendre les crayons prélevés dans un carquois vertical (46) de forme pyramidale convergeant vers le bas et dont deux faces opposées présentent des saillies (94) de mise en quinconce des crayons,

(c) on écarte les uns des autres de façon symétrique plusieurs groupes de colonnes de crayons pour créer des espaces de réception, à la partie haute du carquois,

(d) on saisit l'ensemble des crayons restants que l'on fait tourner en bloc de 90° et que l'on fait descendre dans les espaces libres de réception entre groupes de colonnes, l'organe de prélèvement ayant au préalable été tourné de 90°.

(e) et on serre les rangées de crayons en relevant le carquois pour constituer une botte compacte.

2. Dispositif de compactage pour mettre un faisceau de crayons de combustible disposé dans un assemblage suivant une maille carrée sous forme d'une botte de crayons jointifs à maille triangulaire, caractérisé en ce qu'il comprend: un carquois (46) de forme pyramidale convergeant vers le bas et de section rectangulaire, deux faces opposées du carquois étant munies de saillies (94) de profondeur croissant vers le bas pour tendre à ordonner les crayons suivant un pas triangulaire; des cloisons (92) perpendiculaires aux faces munies de saillies, destinées à séparer et guider des files de crayons à la partie haute du carquois; une grille (48) située à la partie haute du carquois, comportant des alvéoles d'introduction des crayons et constituée en plusieurs fractions (84-88) pouvant être écartées et rapprochées les unes des autres parallèlement à la direction des cloisons; un fond (52) pouvant prendre une position haute proche du bas du carquois et une position basse éloignée du carquois; et une tête de préhension (36) permettant de prélever plusieurs crayons à la fois et de les introduire dans le carquois.

3. Dispositif selon la revendication 2, caractérisé en ce que le carquois est incorporé à une cellule de regroupement (40) comprenant de plus des moyens permettant de déplacer verticalement le carquois entre une position basse, au-dessus d'un fond (52) de réception des crayons, et une position haute libérant les crayons sur le fond.

4. Dispositif selon la revendication 3, caractérisé en ce qu'il comprend de plus un outil (42) de mise en botte présentant des pinces (64) disposées à plusieurs niveaux différents, déplaçables entre une position écartée où elles libèrent les crayons et une position resserrée où elles maintiennent les crayons en botte.

5. Dispositif selon la revendication 2, 3 ou 4, caractérisé en ce qu'il comprend un ensemble (44) de mise en étui (70) comportant des moyens pour déplacer un étui à fond ouvert verticalement par dessus la botte et des moyens pour replier les parties terminales inférieures des parois de l'étui de stockage (70) sous un fond (52) supportant la botte.

6. Dispositif selon la revendication 5, caractérisé en ce qu'il comprend des moyens d'amenée d'un fond (52) à la fois sur un pied (54) situé sous l'emplacement du carquois et à distance de ce dernier.

7. Dispositif selon l'une quelconque des revendications 2 à 6, caractérisé en ce qu'il comprend un outil de préhension (28) déplaçable horizontalement entre un emplacement situé au-dessus d'un étui (16) de dépose d'assemblage à démanteler et un emplacement situé au-dessus du carquois, ledit outil comprenant une tête de préhension (36) de prélèvement de plusieurs crayons à la fois dans l'étui de dépose (16) et des moyens pour déplacer verticalement ladite tête afin de soulever les crayons hors de l'étui de dépose (16) et de les introduire dans le carquois (46) à travers la grille (48) de ce dernier.

8. Dispositif selon la revendication 7, caractérisé en ce que la tête comprend des moyens pour saisir simultanément l'ensemble des crayons, exception faite de crayons placés dans les lignes adjacentes à celles qui comportent des noeuds inoccupés dans l'assemblage et qui ne sont pas adjacents à un noeud inoccupé.

9. Dispositif selon la revendication 8, caractérisé en ce que l'outil de préhension (28) comporte des moyens permettant de faire tourner la tête de préhension (36) de 90° afin de saisir les crayons restant dans l'assemblage après un premier prélèvement.

10. Dispositif selon la revendication 9, destiné à traiter un assemblage combustible comportant un réseau à 17 x 17 noeuds dont 264 sont occupés par des crayons de combustible, caractérisé en ce que la tête de préhension (36) est prévue pour saisir 204 crayons lors du premier transfert et 60 crayons lors du second.

11. Dispositif selon l'une quelconque des revendications 7 à 10, caractérisé en ce que la tête de préhension (36) comprend un corps (92) auquel sont fixées des plaques-guides supérieure (94) et inférieure (95), une plaque intermédiaire (96) mobile entre les plaques guides, transversalement par rapport aux crayons, et un vérin (100) permettant de déplacer la plaque mobile entre une position où elle coince les crayons combustibles préalablement introduits dans les plaques-guides et une position où elle libère lesdits crayons.

**Patentansprüche**

1. Verfahren zum Anordnen einer Gruppe von Brennstäben, die nach einem rechtwinkligen Gittermuster angeordnet und aus einer Brennelementkassette herausgezogen sind in Form eines Bündels sich berührender Brennstäbe in einer triangulären Konfiguration, dadurch gekennzeichnet, daß

a) gleichzeitig die Gesamtheit der Brennstäbe aus der Brennelementkassette (14) entnommen wird, außer den Brennstäben, die auf den Linien angeordnet sind, die zu denen benachbart sind, die leere Kreuzungspunkte der Linien aufweisen und die nicht benachbart sind zu unbesetzten Kreuzungspunkten,

b) die entnommenen Brennstäbe in einen vertikalen Köcher (46) herabgelassen werden, der eine nach unten konvergierende Pyramidenform aufweist, dessen beide sich gegenüberliegende Seiten Vorsprünge (94) aufweisen, um die Brennstäbe in eine Fünfpunkt-Anordnung zu bringen,

c) mehrere Gruppen von Brennstabsäulen voneinander symmetrisch beabstandet werden, um Aufnahmeräume im oberen Bereich des Köchers zu bilden,

d) die verbleibenden Brennelementstäbe ergriffen und insgesamt um 90° gedreht werden und dadurch, daß in die freien Aufnahmeräume zwischen den Säulengruppen das Entnahmeorgan herabgelassen wird, das zuvor um 90° gedreht worden ist und dadurch, daß

e) die Brennelementstabreihen beim Anheben des Köchers aneinandergedrückt werden, um ein kompaktes Bündel zu bilden.

2. Kompaktiervorrichtung zum Anordnen einer Brennelementgruppe, die in einer Brennelementkassette in Form eines Rechteckgitters angeordnet ist, in Form eines Bündels von Brennstäben, die sich jeweils berühren und nach einer triangulären Gitteranordnung angeordnet sind, gekennzeichnet durch einen Köcher (46) in Form einer nach unten konvergierenden Pyramide mit rechtwinkligem Querschnitt, deren beide sich gegenüberliegende Flächen mit Vorsprüngen (94) einer nach unten größer werdenden Tiefe versehen sind, um die Brennelementstäbe in eine trianguläre Anordnung zu sortieren, durch senkrecht zu den Seiten mit den Vorsprüngen verlaufende Zwischenwände (92) zum Trennen und Führen von Brennstabreihen im oberen Teil des Köchers, ein Gitter (48) im oberen Bereich des Köchers mit Einführungszellen zur Einführung der Brennelementstäbe, bestehend aus mehreren Abschnitten (84 88), die voneinander beabstandet und aneinander angenähert werden können, parallel zur Richtung der Trennwände, einen Boden (52), der eine hohe Position einnehmen kann, nahe des unteren Teils des Köchers und eine niedrige, vom Köcher entfernte Position und einen Entnahmekopf, der mehrere Brennelementstäbe auf einmal entnehmen und in den Köcher einführen kann.

3. Vorrichtung nach Anspruch 2, dadurch gekennzeichnet, daß der Köcher in eine Sammelzelle (40) integriert ist, die zusätzliche Mittel zum vertikalen Verschieben des Köchers zwischen einer niedrigen Position oberhalb des Bodens (52) zur Aufnahme der Brennelementstäbe und einer hohen Position, in der die Stäbe auf dem Boden befreit werden, aufweist.

4. Vorrichtung nach Anspruch 3, dadurch gekennzeichnet, daß sie zusätzlich ein Bündelungswerkzeug (42) aufweist mit Klemmen (64), die auf verschiedenen Höhen bewegbar zwischen einer geöffneten Position, in der sie die Brennelementstäbe befreien und einer geschlossenen Stellung, in der sie die Brennelementstäbe gebündelt haltern.

5. Vorrichtung nach Anspruch 2, 3 oder 4, gekennzeichnet durch eine Anordnung (44) zum Einhüllen eines Bündels mit einem Organ zum Verschieben einer Hülle mit offenem Boden vertikal oberhalb des Bündels und Mitteln zum Füllen der unteren Endbereiche der Wandungen der Lagerhülle (70) unter einen Boden (52), der das Bündel trägt.

6. Vorrichtung nach Anspruch 5, gekennzeichnet durch Mittel zum Heranführen eines Bodens (52) auf einen Sockel (54), der unterhalb der Position des Köchers und mit Abstand zu diesem angeordnet ist.

7. Vorrichtung nach einem der Ansprüche 2 bis 6, gekennzeichnet durch ein Entnahmewerkzeug (28), das horizontal bewegbar ist zwischen einer Stellung oberhalb einer Hülle (16) zur Lagerung einer abzutragenden Brennelementkassette und einer Stellung oberhalb des Trichters, wobei dieses Werkzeug einen Entnahmekopf (36) aufweist zur Entnahme mehrerer Brennelementstäbe gleichzeitig aus der Lagerhülse (16) und Mittel zum Verschieben dieses Kopfes vertikal, um die Stäbe aus der Lagerhülse (16) zu entfernen und sie in den Köcher (46) durch dessen Gitter (48) einzuführen).

8. Vorrichtung nach Anspruch 7, dadurch gekennzeichnet, daß der Kopf Mittel zum gleichzeitigen Ergreifen aller Brennelementstäbe außer der Stäbe, die in Linien angeordnet sind, die benachbart zu denen sind, die unbesetzte Kreuzungspunkte in der Brennelementkassette aufweisen und die nicht benachbart zu einem unbesetztem Kreuzungspunkt sind, zu ergreifen.

9. Vorrichtung nach Anspruch 8, dadurch gekennzeichnet, daß das Entnahmewerkzeug (28) Mittel zum Drehen des Entnahmekopfes (36) um 90° aufweist, um die verbleibenden Brennelementstäbe in der Brennelementkassette nach einer ersten Entnahme zu ergreifen.

10. Vorrichtung nach Anspruch 9, zur Behandlung einer Brennelementkassette mit einem 17 x 17 Gitter, von dem 264 Kreuzungspunkte von Brennelementstäben besetzt sind, dadurch gekennzeichnet, daß der Entnahmekopf (36) vorgesehen ist, um 204 Brennelementstäbe während eines ersten Transfers zu greifen und 60 Brennelementstäbe während eines zweiten Transfers.

11. Vorrichtung nach einem der Ansprüche 7 bis 10, dadurch gekennzeichnet, daß der Entnahmekopf (36) einen Körper (92) aufweist, an dem obere Führungsplatten (94) und untere Führungsplatten (95), sowie eine Zwischenplatte (96) angeordnet sind, wobei letztere zwischen den Führungsplatten quer zu den Stäben beweglich ist und eine Kolbenzylindereinheit (100), die eine Platte verschiebt, die beweglich ist zwischen einer Stellung, in der sie die zuvor in die Führungsplatten eingeführten Brennelementstäbe klemmt und einer Stellung, in der sie die Brennelementstäbe löst.

**Claims**

1. Method for compacting a bundle of fuel elements disposed in a square lattice, removed from a fuel assembly, into a packed array of mutually contacting fuel elements in a triangular configuration, characterized by the steps of:

(a) simultaneously withdrawing all elements from the assembly (14), except those elements which are located in rows adjacent to those rows which include empty nodes and which are not adjacent to an empty node,

(b) lowering the withdrawn elements into a vertical compacting chamber (46) of pyramidal shape converging downwardly, two mutually opposed surfaces of the chamber having projections (94) for giving a quinconx configuration to the elements,

(c) symmetrically moving apart a plurality of groups of columns of elements for generating reception spaces, at the higher portion of the compacting chamber,

(d) gripping all remaining elements, rotating them by 90° in bulk and lowering them into the free reception spaces between the groups of columns, after the withdrawing member has been rotated by 90°,

(e) and compacting all rows of elements by moving the compacting chamber upwardly for constituting a compact array.

2. Compacting apparatus for consolidating a bundle of fuel elements located in an assembly according to a square lattice into a packed array of mutually contacting elements in a triangular lattice, characterized in that it comprises: a compacting chamber (46) of pyramidal shape converging downwardly and of rectangular cross-section, two mutually opposed surfaces of the compacting chamber being provided with projections (94) whose depth is greater near the bottom so as to locate the elements according to a triangular pattern; dividing walls (92) perpendicular to the surfaces which are provided with projections, for separating and guiding rows of elements in the upper part of the compacting chamber; a grid (48) situated at the top part of the compacting chamber defining cells for introducing the elements and formed in several fractions (84, 88) which may be moved apart and toward each other in a direction parallel to the dividing walls; a bottom wall (52) which may have a higher position close to the bottom of the compacting chamber and a lower position remote from the compacting chamber; and a gripping head (36) for withdrawing a plurality of elements simultaneously and for introducing them into the compacting chamber.

3. Apparatus according to claim 2, characterized in that the compacting chamber is part of a compacting cell (40) further comprising means for vertically moving the compacting chamber between a lower position, above a bottom wall (52) for receiving said elements, and an upper position for releasing said elements on the bottom wall.

4. Apparatus according to claim 3, characterized in that it further comprises a trussing tool (42) having grippers (64) disposed at a plurality of different horizontal levels, movable between a spaced apart position in which they release said elements and a closed up position in which they hold the elements as a tightly packed array.

5. Apparatus according to claim 2, 3 or 4, characterized in that it comprises a unit (44) for placing the array in a container (70), having means for moving one container having an open bottom vertically to a position over the array and means for folding the lower endmost parts of walls of the storage container case (70) under a bottom wall (52) supporting the array.

6. Apparatus according to claim 5, characterized in that it comprises means for bringing one bottom wall at a time onto a support (54) located under the compacting chamber and at a distance therefrom.

7. Apparatus according to any one of claims 2-6, characterized in that it comprises a gripping tool (28) movable horizontally between a position situated above a case (16) for depositing an assembly to be dismantled and a position situated above the compacting chamber, said tool comprising a gripping head (36) for taking several elements at a time from the demounting case (16) and means for vertically moving said head so as to raise the elements out of the demounting case (16) and inserting them into the compacting chamber (46) through the grid (48) thereof.

8. Apparatus according to claim 7, characterized in that the head comprises means for simultaneously grasping all elements in the assembly except for elements placed in rows adjacent those rows which comprise empty locations in the assembly and which are not adjacent to an empty node.

9. Apparatus according to claim 8, characterized in that the gripping tool (28) comprises means for rotating the gripping head (36) through 90° so as to grasp the elements remaining in the assembly after a first removal operation.

10. Apparatus according to claim 9, for processing a fuel assembly comprising a lattice with 17 x 17 nodes, 264 of which are occupied by fuel elements, characterized in that the gripping head (36) is provided for grasping 204 elements during the first transfer and 60 elements during the second.

11. Apparatus according to any of claims 7-10, characterized in that the gripping head (36) comprises a body (92) to which there are connected an upper guide plate (94), a lower guide plate (95), an intermediate plate (96) which is movable between the guide plates, transversally with respect to the elements, and a jack (100) for moving the movable plate between a location where it wedges the fuel elements previously introduced into the guide plates and a position where it releases said elements.

FIG.1.

# FIG.1A.

# FIG.1B.

# FIG.1C.

EP  0 218 494  B1

FIG.1D.

FIG.2.

FIG.1E.

# FIG.1F.

# FIG.1G.

FIG.3.

FIG.4.

# FIG.5.

46

92

# FIG.6.

46

94

FIG.7.

FIG.8.

FIG.9.

FIG.14.

FIG.15.

FIG.10.

FIG.11.

FIG.12.

FIG.13.

FIG.16.

# FIG.17.

114

104

112

116

106    106

94

96

95